# FASCICULE DE BREVET EUROPEEN

(11) **EP 1 847 138 B1**
(45) Date de publication et mention de la délivrance du brevet: **17.02.2010**
(21) Numéro de dépôt: 05824458.3
(22) Date de dépôt: 05.12.2005
(51) Int. Cl.: H04W 84/00

(54) **SYSTEME ET PROCEDE DE TELECOMMUNICATION POUR ASSURER LE FONCTIONNEMENT D'UN TELEPHONE MOBILE A BORD D'UN AVION OU D'UN BATEAU, STATION TERRESTRE ET STATION DE BASE ADAPTEES POUR CE SYSTEME**
TELEKOMMUNIKATIONSSYSTEM UND VERFAHREN ZUM BETRIEB EINES MOBILTELEFONS AN BORD EINES FLUGZEUGS ODER SCHIFFS UND FÜR DAS SYSTEM AUSGELEGTE LANDSTATION UND BASISSTATION
TELECOMMUNICATION SYSTEM AND METHOD FOR OPERATING A MOBILE TELEPHONE ON BOARD AN AIRCRAFT OR SHIP, LAND STATION AND BASE STATION ADAPTED FOR SAID SYSTEM

(30) Priorité: 03.12.2004 FR 0412888
(43) Date de publication de la demande: 24.10.2007
(73) Titulaire: Orangefrance, 94745 Arcueil Cedex (FR)
(72) Inventeur: DAOUDAL, Jean-pierre, F-78320 Levis Saint Nom (FR)
(74) Mandataire: Loisel, Bertrand
(86) Numéro de dépôt international: PCT/FR2005/003028
(87) Numéro de publication internationale: WO 2006/059019

(56) Documents cités:
- EP-A- 1 282 327
- WO-A-01/15338
- GB-A- 2 282 299
- US-A1- 2002 045 444
- US-A1- 2002 072 328
- US-B1- 6 603 967

## Description

La présente invention concerne un système et un procédé de télécommunication, une station terrestre et une station de base adaptées pour ce système.

Des systèmes de télécommunication connus comportent une station de base embarquée dans un bateau et propre à créer une zone de couverture locale pour les téléphones mobiles des passagers du bateau.

Dans ces systèmes, la station de base embarquée est uniquement raccordée au réseau A de téléphonie mobile terrestre public d'un opérateur d'un pays X. Dès lors, la zone de couverture globale du réseau A se compose d'une zone de couverture terrestre dans le pays X et d'une zone de couverture maritime plus ou moins limitée à l'environnement de la station de base embarquée. De tels systèmes ne posent aucun problème tant que le bateau reste dans les eaux territoriales du pays X.

Par contre, lorsque le bateau rentre dans les eaux territoriales d'un pays tiers Y, la station de base embarquée dans le bateau crée une zone de couverture qui s'étend dans les eaux territoriales du pays Y. Une telle extension de la zone de couverture du réseau A dans les eaux territoriales du pays Y est interdite par des réglementations internationales.

Ainsi, en théorie, dés qu'un bateau équipé d'une station de base embarquée rentre dans les eaux territoriales d'un pays tiers, la station de base embarquée doit être éteinte de sorte que les passagers ne peuvent plus passer d'appel téléphonique tant que le bateau n'est pas rentré dans la zone dé couverture d'un réseau B de téléphonie mobile terrestre d'un opérateur du pays Y.

Un inconvénient similaire existe à bord des avions lors des vols internationaux.

US 6,603,967 décrit un système de télécommunication embarqué dans un avion dans lequel un changement de réseau est effectué en dépendance de l'opérateur auquel un appelant appartient.

WO 01/15338 concerne un système de télécommunication pour éviter l'interférence d'une station de base embarquée avec des réseaux terrestres.

US 2002/0072328 décrit un système de télécommunication embarqué sur un bateau.

L'invention vise à remédier à cet inconvénient- en proposant un système de télécommunication permettant d'assurer le fonctionnement d'un téléphone mobile à bord d'un bateau ou d'un avion tout en respectant les réglementations internationales.

L'invention a donc pour objet un système de télécommunication comportant :
- un module de raccordement propre à basculer le raccordement de la station de base embarquée d'un premier vers un second réseau de téléphonie mobile terrestre public (PLMN : Public Land Mobile Network) en réponse à une commande de changement de réseau.

Dans le système ci-dessus, la station de base embarquée peut être raccordée aussi bien au réseau A qu'au réseau B. Ainsi, il devient possible d'éviter d'étendre la zone de couverture du réseau A dans les eaux territoriales ou l'espace aérien national du pays Y puisqu'il suffit, après le franchissement d'une frontière du pays Y de raccorder la station de base embarquée au réseau B. Dés lors, immédiatement après le franchissement de la frontière, les passagers du bateau ou de l'avion peuvent utiliser leur téléphone mobile pour passer un appel sans attendre que le bateau ou l'avion soit rentré dans la zone de couverture terrestre du réseau B.

Les modes de réalisation de ce système peuvent comporter une ou plusieurs des caractéristiques suivantes :
- un capteur propre à mesurer la position géographique de la station de base embarquée, et un module de sélection propre à générer automatiquement une commande de changement de réseau transmise au module de raccordement en fonction de la position géographique mesurée,
- le module de sélection est adapté pour sélectionner le réseau auquel doit être raccordée la station de base embarquée en appliquant une règle prédéterminée selon laquelle si la station de base est dans les eaux territoriales ou l'espace aérien d'un pays, elle doit être uniquement raccordée à un réseau de téléphonie mobile de ce pays,
- la règle prédéterminée définit une zone tampon de part et d'autre d'une frontière maritime ou aérienne dans laquelle le raccordement de la station de base embarquée reste inchangé après un premier basculement du raccordement, même si la frontière est franchie,
- un sous-module de téléchargement d'une nouvelle configuration dans la station de base embarquée pour adapter cette station de base à son raccordement à un nouveau réseau.

Les modes de réalisation de ce système ont en outre les avantages suivants :
- le module de sélection permet de déclencher automatiquement le raccordement de la station de base embarquée à un nouveau réseau de téléphonie mobile lors du franchissement d'une frontière,
- l'utilisation d'une règle prédéterminée telle que définie ci-dessus permet de respecter les réglementations internationales,
- l'utilisation d'une zone tampon permet au bateau ou à l'avion de naviguer le long d'une frontière sans que les communications téléphoniques soient coupées lors de chaque franchissement de cette frontière.

L'invention a également pour objet une station terrestre spécialement adaptée pour être mise en oeuvre dans le système de télécommunication ci-dessus, ainsi qu'un procédé de fonctionnement de ce système de télécommunication.

L'invention sera mieux comprise à la lecture de la description qui va suivre, donnée uniquement à titre d'exemple et faite en se référant aux dessins sur lesquels :
- la figure 1 est une illustration schématique de l'architecture d'un système de télécommunication pour assurer le fonctionnement d'un téléphone mobile à bord d'un bateau, et
- la figure 2 est un organigramme d'un procédé de télécommunication pour assurer le fonctionnement d'un téléphone mobile à bord d'un bateau.

La terminologie utilisée dans cette description est celle définie notamment dans les standards GSM (Global System for Mobile Communication).

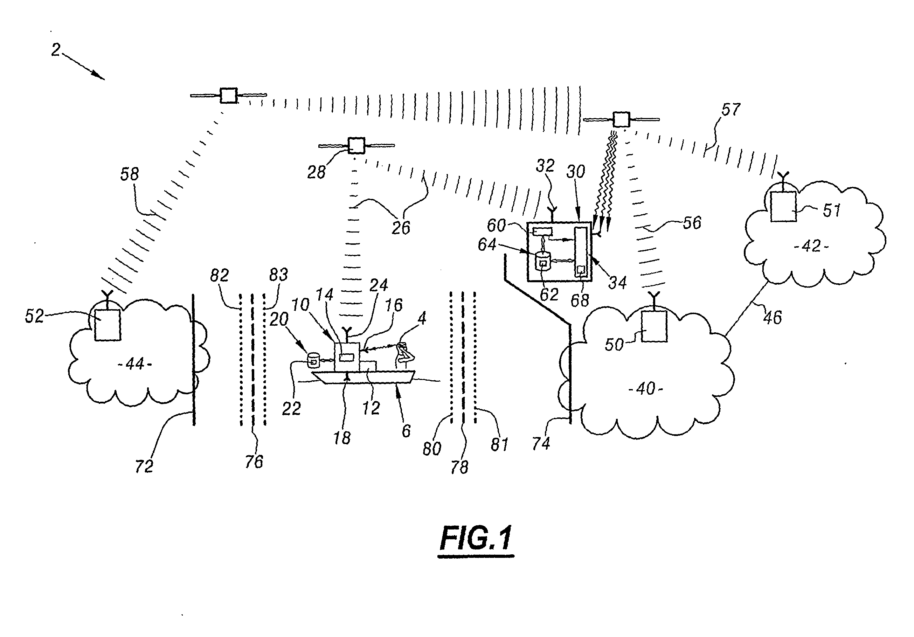

La figure 1 représente un système de télécommunication, désigné par la référence générale 2, propre à assurer le fonctionnement d'un téléphone mobile 4 à bord d'un bateau 6.

Le bateau 6 est équipé d'une station de base ou BTS (Base Transceiver Station) 10 et d'un capteur 12 propre à mesurer la position géographique du bateau sur la surface terrestre.

Le capteur 12 est, par exemple, un capteur GPS (Global Positioning System).

La station 10 est équipée d'au moins un émetteur/récepteur 14, d'une antenne extérieure 16 et d'au moins une antenne intérieure 18.

L'antenne extérieure permet à un passager présent sur le pont du bateau 6 d'établir une communication téléphonique tandis que l'antenne intérieure 18 permet à un passager situé à l'intérieur de la coque du bateau 6 d'établir une communication téléphonique.

La station 10 est configurable à distance. A cet effet, elle est raccordée à une mémoire 20 contenant des paramètres 22 de configuration de la station 10. Pour simplifier la figure 1, la mémoire 10 est représentée à l'extérieur de la station 10 mais, de préférence, la mémoire 20 est intégrée à l'intérieur de la station 10.

La station 10 est également équipée d'une antenne 24 pour établir une liaison satellitaire 26 avec une station terrestre 30 par l'intermédiaire d'un satellite 28.

La station terrestre 30 est équipée d'une antenne satellitaire 32 et d'un module 34 de raccordement propre à raccorder la station 10 à une station BSC (Base Station Controller) d'un réseau de téléphonie mobile terrestre public ou PLMN (Public Land Mobile Network).

A titre d'illustration, seul trois réseaux PLMN 40, 42 et 44 ont été représentés. Les réseaux 40 et 44 sont des réseaux de téléphonie mobile terrestre public respectivement des pays Y et X. Le réseau 42 utilisé ici lors de la navigation dans les eaux internationales, est un réseau de téléphonie mobile terrestre dédié aux eaux internationales, par exemple. Le réseau 40 est un HPLMN (Home Public Land Mobile Network) pour le téléphone 4.

Chacun de ces réseaux 40 et 44 est formé d'une multitude de stations de base terrestres définissant une zone de couverture terrestre globale représentée par les contours en forme de nuages. Les réseaux 40 et 44 comportent aussi quelques stations de base embarquées à bord de bateaux et définissant une zone de couverture maritime. Le réseau 42 est, par exemple ici, uniquement formé de stations de base embarquées à bord de bateaux, ce qui permet d'associer à ce réseau un facturation particulière. A l'intérieur de la zone de couverture terrestre globale d'un de ces réseaux 40 ou 44, un téléphone mobile peut être déplacé sans que la communication soit coupée grâce à une fonction connue sous le terme de « hand-over ». Lorsqu'un téléphone mobile est déplacé de la zone de couverture globale d'un réseau, par exemple le réseau 40, vers la zone de couverture globale d'un autre réseau, la communication téléphonique en cours est interrompue lors du franchissement de la frontière entre ces deux réseaux et doit être rétablie en effectuant un nouvel appel à partir du nouveau réseau. Cette fonction est connue sous le terme de « Roaming ». A cet effet, typiquement, les différents réseaux sont raccordés par l'intermédiaire de liaisons de transmission d'informations tel que, par exemple, la liaison 46 qui relie le réseau 40 au réseau 42.

Chacun de ces réseaux 40, 42 et 44 comportent une station BSC spécifiquement adaptée pour être raccordée à la station 10. Ici, trois de ces stations BCS 50 à 52 appartenant respectivement aux réseaux 40, 42 et 44 sont représentées.

Le module 34 de raccordement est plus précisément apte à raccorder la station 10 aux stations BSC 50 à 52 par l'intermédiaire de liaisons satellitaires respectivement 56, 57 et 58.

Le module 34 raccorde la station 10 exclusivement à une seule station BSC à la fois. Le basculement du raccordement de la station 10 à un nouveau réseau se fait, en réponse à une commande de changement de réseau.

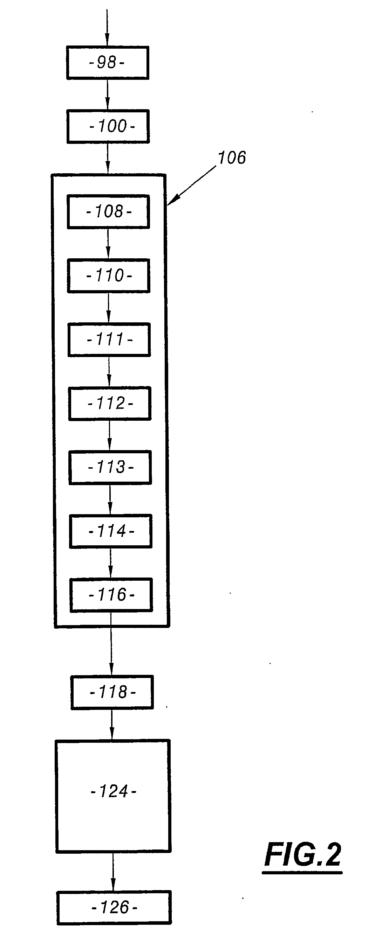

Ici, de manière à respecter les réglementations internationales, la station terrestre 30 comporte un module de sélection 60 propre à générer automatiquement une commande de changement de réseau et à la transmettre au module de raccordement en fonction de la position géographique mesurée par le capteur 12. Plus précisément, le module de sélection 60 agit conformément à des règles préenregistrées 62 dans une mémoire 64. Des exemples de règles préenregistrées sont donnés en regard de la figure 2.

Par exemple, la mémoire 64 comporte les règles suivantes :
- si le bateau 6 navigue dans les eaux territoriales d'un pays, alors la station 10 doit être raccordée au réseau de téléphonie mobile terrestre de ce pays,
- si le bateau 6 navigue dans les eaux internationales, alors la station 10 doit être raccordée au réseau 42, et
- si le bateau 6 navigue dans une zone tampon autour d'une frontière maritime, alors :
   a) lors du premier franchissement de la frontière, la station 10 doit être raccordée au réseau de téléphonie mobile terrestre du pays dans les eaux territoriales duquel le bateau vient de rentrer ou au réseau 42 s'il s'agit des eaux internationales, et
   b) après ce premier franchissement de la frontière et tant que le bateau n'est pas sorti de la zone tampon, maintenir inchangé le raccordement de la station 10 établie au point a).

Pour déterminer si le bateau 6 se trouve dans les eaux territoriales d'un pays ou dans les eaux internationales ou encore dans une zone tampon, le module 6 est également apte à comparer la position géographique mesurée pour le bateau 6 à une carte maritime préenregistrée sur laquelle sont définies les frontières maritimes entre les eaux territoriales et les eaux internationales ainsi que les zones tampon.

Le module de raccordement 34 est équipé d'un sous-module 68 de téléchargement d'une nouvelle configuration dans la station 10. A cet effet, des paramètres de configuration à télécharger sont enregistrés, par exemple, dans la mémoire 64. Typiquement, ces paramètres de configuration sont fournis par les opérateurs des réseaux 40, 42 et 44 du système 2.

Enfin, les traits gras 72 et 74 représentent les côtes terrestres respectivement du pays X et du pays Y. Les lignes 76, 78 en tirets discontinus représentent les frontières maritimes respectivement des pays X et Y entre d'un côté leurs eaux territoriales et de l'autre côté les eaux internationales.

Des lignes en pointillés 80 à 83 qui s'étendent parallèlement aux frontières maritimes 76, 78 et de part et d'autre de chacune de ces frontières définissent une zone tampon dont l'intérêt apparaîtra à la lecture du procédé décrit en regard de la figure 2. Typiquement, chaque zone tampon correspond à une bande de 2 à 10 Km de large qui s'étend de part et d'autre de la frontière maritime. La largeur de la zone tampon est paramétrable.

Le fonctionnement du système 2 va maintenant être décrit à l'aide de la figure 2 dans le cas particulier du bateau 6 lorsqu'il voyage du pays Y vers le pays X.

Lors d'une étape 98, dés que système 2 est activé, le capteur 12 mesure la position géographique du bateau et la transmet à la station terrestre 30 qui acquiert cette mesure.

Initialement, le bateau 6 est à quai dans un port du pays Y. Dans cet état, la station 10 est raccordée au réseau 40 par l'intermédiaire des liaisons satellitaires 26 et 56. Dans ces conditions, lorsqu'un passager passe un appel téléphonique à partir du téléphone 4, celui-ci est traité comme un appel national puisque le téléphone 4 est dans son réseau HPLMN.

Lorsque le bateau s'éloigne des côtes 74 pour se rapprocher de la ligne 81, le module de raccordement 34 maintient, lors d'une étape 100, le raccordement de la station 10 au réseau 40. Dés lors, dans les eaux territoriales du pays Y, tout appel passé à partir du téléphone 4 est considéré comme un appel national et facturé comme tel.

Ensuite, lorsque le bateau 6 franchit la ligne 81 et rentre dans la zone tampon, le module 34 conserve le raccordement de la station 10 au réseau 40 conformément aux règles préenregistrées 62.

Si le bateau 6 continue de s'éloigner des côtes 74, il franchit pour la première fois la frontière 78. A ce moment là, la station terrestre 30 relève le franchissement de la frontière 78 et procède à une étape 106 de basculement du raccordement de la station 10, du réseau 40 vers le réseau 42.

A cet effet, lors d'une opération 108, la station 10 est éteinte, c'est-à-dire que sa zone de couverture est supprimée. Ceci est, par exemple, réalisé en diminuant progressivement la puissance de l'émetteur/récepteur 14 pour réduire progressivement la zone de couverture jusqu'à la faire disparaître complètement.

Ensuite, lors d'une opération 110, le module de raccordement 34 déconnecte la station 10 du réseau 40 et plus précisément de la station BSC 50. A cet effet, la liaison satellitaire 56 est interrompue. Lors de cette opération 110, la station terrestre 30 agit sur le réseau 40 de manière à ce que celui-ci ne déclenche pas une alarme en réponse à la déconnection de la station 10. Des moyens conventionnels sont utilisés pour cela tels que, par exemple, le bouclage de la liaison 56 ou l'envoi d'instructions spécifiques à la station BSC 50.

Une fois la station 10 déconnectée du réseau 40, le module 60 sélectionne, lors d'une opération 111, un autre réseau auquel doit être raccordée la station 10 en fonction de la position géographique actuelle mesurée par le capteur 12 et des règles préenregistrées 62. Par exemple, ici les règles préenregistrées indiquent que la station 10 doit être raccordée au réseau 42.

Une fois que le réseau auquel la station 10 doit être raccordée a été sélectionné, le module de sélection 60 envoie, lors d'une opération 112, une commande de changement de réseau au module de raccordement 34. En réponse, lors d'une opération 113, le module 34 et plus précisément le sous module 68 télécharge les paramètres de configuration de la station 10 nécessaires à son raccordement au nouveau réseau sélectionné, dans la mémoire 20 via la liaison satellitaire 26.

Une fois que la station 10 a été configurée pour être raccordée au réseau 42 et plus précisément à la station BSC 51 le module 34 raccorde, lors d'une opération 114, la station 10 au réseau 42 par l'intermédiaire de la liaison satellitaire 57. Une fois le raccordement achevé, lors d'une opération 116, la station 10 est allumée de manière à créer une zone de couverture qui englobe le bateau 6. Typiquement, lors de l'opération 116, la zone de couverture est créée en augmentant progressivement la puissance de l'émetteur/récepteur 14 jusqu'à obtenir une zone de couverture permettant de passer un appel à partir d'un point quelconque du bateau 6.

Lors de l'étape 106, la fonction de « Roaming » est mise en oeuvre de sorte que les communications en cours sont interrompues et doivent être réétablies une fois que la station 10 est raccordée au réseau 42.

Ensuite, tant que le bateau 6 navigue dans la zone tampon, le module de raccordement maintient, lors d'une étape 118, le raccordement de la station 10 au réseau 40 même si le bateau franchit à nouveau la frontière 78. Ceci limite le nombre de changement de réseau lorsqu'un bateau navigue le long et à proximité de la frontière 78.

Dans les eaux internationales, tout appel passé à partir du téléphone 4 est considéré comme un appel international transitant par le réseau 42 et sera donc facturé à un tarif spécifique.

Lorsque le bateau 6 franchit la ligne 83 et rentre dans la zone tampon autour de la frontière 76, le module 34 maintient, le raccordement de la station 10 au réseau 42 tant que la frontière 76 n'a pas été franchie pour la première fois.

Lorsque le bateau 6 se rapproche des côtes 72 et franchit la frontière 76, alors un nouveau basculement du raccordement de la station 10, du réseau 42 vers le réseau 44, doit être effectué lors d'une étape 124. Cette étape 124 s'effectue de façon identique à l'étape 106 à l'exception du fait que :
- les références des liaisons 56 et 57 sont remplacées respectivement par les références 57 et 58
- les références des réseaux 40 et 42 sont remplacées respectivement par les références 42 et 44, et
- les références des stations BSC 50 et 51 sont remplacées respectivement par les références 51 et 52.

Ainsi à l'issue de l'étape 124, la station 10 est raccordée au réseau 44 par l'intermédiaire de la liaison satellitaire 58. Dans ces conditions, tout appel passé à partir du téléphone mobile 4 est facturé comme un appel international puisque le réseau 44 n'est pas le réseau HPLMN du téléphone 4.

Ensuite, tant que le bateau 6 navigue à l'intérieur de la zone tampon, le raccordement de la station 10 au réseau 44 est maintenu inchangé, lors d'une étape 126.

Grâce au système 2, tant que le bateau 6 est dans les eaux territoriales du pays X ou Y la station 10 est raccordée au réseau d'un opérateur de ce pays X ou Y de sorte que les réglementations internationales sont respectées.

Dans les eaux internationales, la station 10 est raccordée au réseau 42 d'un opérateur d'un pays Z, ce qui est également conforme aux réglementations internationales.

Ainsi, grâce au système 2, il est à la fois possible d'assurer le fonctionnement d'un téléphone mobile à bord d'un bateau franchissant des frontières maritimes et de respecter les réglementations internationales ainsi que les règles de facturation.

De nombreux autres modes de réalisation de ce système sont possibles. Par exemple, le module de téléchargement 34 est implanté, en variante, dans les stations BSC des réseaux de téléphonie mobile terrestre auxquels la station 10 doit être raccordée. Cette variante permet à l'opérateur du réseau national d'avoir un accès direct aux paramètres de configuration qu'il souhaite télécharger dans la station 10.

Le système 2 a été décrit dans le cas particulier où la position géographique est mesurée à l'aide d'un capteur 12 embarqué dans le bateau 6. Toutefois, cette position géographique du bateau 6 peut être acquise et transmise par tout moyen à la station terrestre 30. Par exemple, la position du bateau 6 est déterminée par des radars positionnés sur les côtes terrestres.

Ici, le changement de réseau est déclenché automatiquement par le module de sélection en fonction de la position géographique mesurée du bateau. En variante, ce changement de réseau est déclanché manuellement par un opérateur à bord du bateau 6.

Les liaisons 56 à 58 ont été décrites comme étant des liaisons satellitaires. En variante, ces liaisons sont remplacées par des liaisons utilisant d'autres supports de transmission tels que, par exemple, des fibres optiques.

Ce qui vient d'être décrit dans le cas particulier d'un bateau s'applique également à un avion embarquant une station de base telle que la station 10.

## Revendications

1. Système de télécommunication (2) pour assurer le fonctionnement d'un téléphone mobile (4) à bord d'un bateau (6) ou d'un avion, comportant :
- au moins une station de base configurable (10) embarquée dans le bateau (6) ou l'avion et propre à créer une zone de couverture locale pour les téléphones mobiles des passagers du bateau ou de l'avion, cette station de base (10) étant raccordée à une première station BSC (50) d'un premier réseau (40) de téléphonie mobile terrestre public et configurée de manière à ce que tout appel à partir d'un téléphone mobile (4) à l'intérieur de la zone de couverture de la station de base embarquée (10) soit traité comme un appel national si le premier réseau (40) est le réseau HPLMN (Home Public Land Mobile Network) de ce téléphone mobile (4), et
- **caractérisé en ce qu'**il comporte un module (34) de raccordement propre à basculer le raccordement de la station de base embarquée (10) de la première station BSC (50) vers une seconde station BSC (51) d'un second réseau de téléphonie mobile terrestre public (42) en réponse à une commande de changement de réseau, et à configurer la station de base embarquée (10) de manière à ce que cette fois ci tout appel passé à partir du même téléphone mobile (4) à l'intérieur de la zone de couverture de la station de base embarquée (10) soit considéré comme un appel international transitant par le second réseau (42) si le premier réseau (40) est le réseau HPLMN de ce téléphone mobile ;
- un capteur (12) propre à mesurer la position géographique de la station de base embarquée (10), et un module (60) de sélection propre à générer automatiquement une commande de changement de réseau transmise au module de raccordement (34) en fonction de la position géographique mesurée.

2. Système selon la revendication 1, **caractérisé en ce que** le module de sélection (60) est adapté pour sélectionner le réseau auquel doit être raccordée la station de base embarquée (10) en appliquant une règle prédéterminée (62) selon laquelle, si la station de base (10) est dans les eaux territoriales ou l'espace aérien d'un pays, elle doit être uniquement raccordée à un réseau de téléphonie mobile de ce pays.

3. Système selon la revendication 2, **caractérisé en ce que** la règle prédéterminée (62) définit une zone tampon de part et d'autre d'une frontière maritime (76, 78) ou aérienne dans laquelle le raccordement de la station de base embarquée (10) reste inchangé après un premier basculement du raccordement même si la frontière (76, 78) est franchie.

4. Système selon l'une quelconque des revendications précédentes, **caractérisé en ce qu'**il comporte un sous- module (68) de téléchargement d'une nouvelle configuration dans la station de base embarquée (10) pour adapter cette station de base (10) à son raccordement à un nouveau réseau (42, 44).

5. Station terrestre adaptée pour être mise en oeuvre dans un système de télécommunication (2) conforme à l'une quelconque des revendications précédentes, **caractérisée en ce qu'**elle comporte le module (34) de raccordement propre à basculer le raccordement de la station de base embarquée (10) de la première station BSC (50) vers une seconde station BSC (51) d'un second réseau de téléphonie mobile terrestre public en réponse à une commande de changement de réseau,
**caractérisée en ce qu'**elle comporte le module (60) de sélection propre à générer automatiquement une commande de changement de réseau transmise au module de raccordement (34) en fonction de la position géographique mesurée de la station de base embarquée (10).

6. Station de base embarquée (10) à bord d'un bateau (6) ou d'un avion apte à être mise en oeuvre dans un système de télécommunication (2) conforme à la revendication 4, **caractérisée en ce qu'**elle comporte des paramètres de configuration (22) adaptés pour être modifiés par le module de téléchargement (20) d'une nouvelle configuration.

7. Procédé de télécommunication pour assurer le fonctionnement d'un téléphone mobile (4) à bord d'un bateau (6) ou d'un avion comportant une station de base (10) configurable embarquée propre à créer une zone de couverture locale pour les téléphones mobiles des passagers de ce bateau (6) ou de cet avion, cette station de base étant raccordée à une première station BSC (50) d'un premier réseau de téléphonie mobile terrestre public (40) et configurée de manière à ce que tout appel à partir d'un téléphone mobile (4) à l'intérieur de la zone de couverture de la station de base embarquée (10) soit traité comme un appel national si le premier réseau (40) est le réseau HPLMN de ce téléphone mobile, **caractérisé en ce qu'**il comporte une étape (106, 124) de basculement du raccordement de la station de base embarquée (10) de la première station BSC (50) vers une seconde station BSC (51) d'un second réseau de téléphonie mobile terrestre public (42) en réponse à une commande de changement de réseau et une étape de configuration de la station de base de manière à ce que cette fois ci tout appel passé à partir du même téléphone mobile (4) à l'intérieur de la zone de couverture de la station de base embarquée (10) soit considéré comme un appel international transitant par le second réseau (42) si le premier réseau (40) est le réseau HPLMN de ce- téléphone mobile (4) et
une étape (98) de mesure de la position géographique de la station de base embarquée (10) et une étape (112) de génération automatique d'une commande de changement de réseau en fonction de la position géographique mesurée.

## Claims

1. Telecommunication system (2) for operating a mobile telephone (4) onboard a ship (6) or an aircraft, comprising:
- at least one configurable base station (10) onboard the ship (6) or the aircraft and specifically for creating a local coverage area for the mobile telephones of the passengers of the ship or of the aircraft, this base station (10) being connected to a first BSC station (50) of a first public land mobile telephone network (40) and configured so that any call made from a mobile telephone (4) within the coverage area of the onboard base station (10) is treated as a national call if the first network (40) is the HPLMN network (Home Public Land Mobile Network) of this mobile telephone (4), and
- **characterized in that** it comprises a connection module (34) specifically for switching the connection of the onboard base station (10) from the first BSC station (50) to a second BSC station (51) of a second public land mobile telephone network (42) in response to a network change command, and for configuring the onboard base station (10) so that this time any call made from the same mobile telephone (4) within the coverage area of the onboard base station (10) will be considered as an international call passing through the second network (42) if the first network (40) is the HPLMN network of this mobile telephone;
- a sensor (12) specifically for measuring the geographic position of the onboard base station (10), and a selection module (60) specifically for automatically generating a network change command transmitted to the connection module (34) according to the measured geographic position.

2. System according to Claim 1, **characterized in that** the selection module (60) is adapted to select the network to which the onboard base station (10) must be connected by applying a predetermined rule (62) whereby, if the base station (10) is in the territorial waters or the airspace of a country, it must only be connected to a mobile network of that country.

3. System according to Claim 2, **characterized in that** the predetermined rule (62) defines a buffer area either side of a maritime (76, 78) or air boundary in which the connection of the onboard base station (10) remains unchanged after a first connection switchover, even if the boundary (76, 78) is crossed.

4. System according to any one of the preceding claims, **characterized in that** it comprises a submodule (68) for downloading a new configuration to the onboard base station (10) to adapt this base station (10) to its connection to a new network (42, 44).

5. Land station adapted to be used in a telecommunication system (2) according to any one of the preceding claims, **characterized in that** it comprises the connection module (34) specifically for switching the connection of the onboard base station (10) from the first BSC station (50) to a second BSC station (51) of a second public land mobile telephone network in response to a network change command, **characterized in that** it comprises the selection module (60) specifically for automatically generating a network change command transmitted to the connection module (34) according to the measured geographic position of the onboard base station (10).

6. Onboard base station (10) on board a ship (6) or an aircraft suitable for use in a telecommunication system (2) according to claim 4, **characterized in that** it comprises configuration parameters (22) suitable to be modified by the module for downloading (20) a new configuration.

7. Telecommunication method for operating a mobile telephone (4) on board a ship (6) or an aircraft comprising an onboard configurable base station (10) specifically for creating a local coverage area for the mobile telephones of the passengers of this ship (6) or this aircraft, this base station being connected to a first BSC station (50) of a first public land mobile telephone network (40) and configured so that any call made from a mobile telephone (4) within the coverage area of the onboard base station (10) is treated like a national call if the first network (40) is the HPLMN network of this mobile telephone, **characterized in that** it comprises a step (106, 124) for switching the connection of the onboard base station (10) from the first BSC station (50) to a second BSC station (51) of a second public land mobile telephone network (42) in response to a network change command and a step for configuring the base station so that this time any call made from the mobile telephone (4) within the coverage area of the onboard base station (10) will be considered as an international call passing through the second network (42) if the first network (40) is the HPLMN network of this mobile telephone (4) and
a step (98) for measuring the geographic position of the onboard base station (10) and a step (112) for automatically generating a network change command according to the measured geographic position.

## Patentansprüche

1. Telekommunikationssystem (2), um den Betrieb eines Mobiltelefons (4) an Bord eines Schiffs (6) oder eines Flugzeugs zu gewährleisten, das aufweist:
- mindestens eine konfigurierbare Basisstation (10), die sich an Bord des Schiffs (6) oder des Flugzeugs befindet und geeignet ist, um ein lokales Versorgungsgebiet für die Mobiltelefone der Passagiere des Schiffs oder des Flugzeugs zu erzeugen, wobei diese Basisstation (10) an eine erste BSC-Station (50) eines ersten landgestützten öffentlichen Mobiltelefonnetzes (40) angeschlossen und so konfiguriert ist, dass jeder Anruf ausgehend von einem Mobiltelefon (4) innerhalb des Versorgungsgebiets der an Bord befindlichen Basisstation (10) wie ein nationaler Anruf behandelt wird, wenn das erste Netz (40) das HPLMN-Netz (Home Public Land Mobile Network) dieses Mobiltelefons (4) ist, und
- **dadurch gekennzeichnet, dass** es ein Anschlussmodul (34) aufweist, das den Anschluss der an Bord befindlichen Basisstation (10) von der ersten BSC-Station (50) zu einer zweiten BSC-Station (51) eines zweiten landgestützten öffentlichen Mobiltelefonnetzes (42) als Antwort auf einen Netzwechselbefehl umschalten und die an Bord befindliche Basisstation (10) so konfigurieren kann, dass dieses Mal jeder vom gleichen Mobiltelefon (4) im Inneren des Versorgungsgebiets der an Bord befindlichen Basisstation (10) getätigte Anruf als ein internationaler Anruf angesehen wird, der über das zweite Netz (42) verläuft, wenn das erste Netz (40) das HPLMN-Netz dieses Mobiltelefons ist;
- einen Sensor (12), der die geographische Position der an Bord befindlichen Basisstation (10) messen kann, und ein Auswahlmodul (60), das in Abhängigkeit von der gemessenen geographischen Position automatisch einen Netzwechselbefehl erzeugen kann, der an das Anschlussmodul (34) übertragen wird.

2. System nach Anspruch 1, **dadurch gekennzeichnet, dass** das Auswahlmodul (60) geeignet ist, um das Netz auszuwählen, an das die an Bord befindliche Basisstation (10) angeschlossen werden soll, indem es eine vorbestimmte Regel (62) anwendet, gemäß der die Basisstation (10), wenn sie sich in den Hoheitsgewässern oder dem Luftraum eines Landes befindet, nur an ein Mobiltelefonnetz dieses Landes angeschlossen werden darf.

3. System nach Anspruch 2, **dadurch gekennzeichnet, dass** die vorbestimmte Regel (62) eine Pufferzone zu beiden Seiten einer Seegrenze (76, 78) oder Luftgrenze definiert, in der der Anschluss der an Bord befindlichen Basisstation (10) nach einem ersten Umschalten des Anschlusses unverändert bleibt, selbst wenn die Grenze (76, 78) überschritten wird.

4. System nach einem der vorhergehenden Ansprüche, **dadurch gekennzeichnet, dass** es ein Submodul (68) des Herunterladens einer neuen Konfiguration in die an Bord befindliche Basisstation (10) aufweist, um diese Basisstation (10) an ihren Anschluss an ein neues Netz (42, 44) anzupassen.

5. Bodenstation, die geeignet ist, um in einem Telekommunikationssystem (2) gemäß einem der vorhergehenden Ansprüche eingesetzt zu werden, **dadurch gekennzeichnet, dass** sie das Anschlussmodul (34) aufweist, das als Antwort auf einen Netzwechselbefehl den Anschluss der an Bord befindlichen Basisstation (10) von der ersten BSC-Station (50) zu einer zweiten BSC-Station (51) eines zweiten landgestützten öffentlichen Mobiltelefonnetzes umschalten kann,
**dadurch gekennzeichnet, dass** sie das Auswahlmodul (60) aufweist, das in Abhängigkeit von der gemessenen geographischen Position der an Bord befindlichen Basisstation (10) automatisch einen Netzwechselbefehl erzeugen kann, der an das Anschlussmodul (34) übertragen wird.

6. Basisstation (10), die sich an Bord eines Schiffs (6) oder eines Flugzeugs befindet und in einem Telekommunikationssystem (2) nach Anspruch 4 eingesetzt werden kann, **dadurch gekennzeichnet, dass** sie Konfigurationsparameter (22) aufweist, die vom Modul (20) zum Herunterladen einer neuen Konfiguration geändert werden können.

7. Telekommunikationsverfahren zur Gewährleistung des Betriebs eines Mobiltelefons (4) an Bord eines Schiffs (6) oder eines Flugzeugs, das eine an Bord befindliche, konfigurierbare Basisstation (10) aufweist, die ein lokales Versorgungsgebiet für die Mobiltelefone der Passagiere dieses Schiffs (6) oder dieses Flugzeugs erzeugen kann, wobei diese Basisstation an eine erste BSC-Station (50) eines ersten landgestützten öffentlichen Mobilfunknetzes (40) angeschlossen und so konfiguriert ist, dass jeder Anruf ausgehend von einem Mobiltelefon (4) innerhalb des Versorgungsgebiets der an Bord befindlichen Basisstation (10) wie ein nationaler Anruf behandelt wird, wenn das erste Netz (40) das HPLMN-Netz dieses Mobiltelefons ist, **dadurch gekennzeichnet, dass** es einen Schritt (106, 124) des Umschaltens des Anschlusses der an Bord befindlichen Basisstation (10) von der ersten BSC-Station (50) zu einer zweiten BSC-Station (51) eines zweiten landgestützten öffentlichen Mobiltelefonnetzes (42) als Antwort auf einen Netzwechselbefehl und einen Schritt der Konfiguration der Basisstation, damit dieses Mal jeder ausgehend von dem gleichen Mobiltelefon (4) im Inneren des Versorgungsgebiets der an Bord befindlichen Basisstation (10) getätigte Anruf als ein internationaler Anruf angesehen wird, der über das zweite Netz (42) verläuft, wenn das erste Netz (40) das HPLMN-Netz dieses Mobiltelefons (4) ist, und
einen Schritt (98) der Messung der geographischen Position der an Bord befindlichen Basisstation (10) und einen Schritt (112) der automatischen Erzeugung eines Netzwechselbefehls in Abhängigkeit von der gemessenen geographischen Position aufweist.
